# EUROPEAN PATENT APPLICATION

(11) **EP 4 462 560 A1**
(43) Date of publication of application: **13.11.2024**
(21) Application number: 24165630.5
(22) Date of filing: 22.03.2024
(51) Int. Cl.: H01M 50/207, H01M 50/503

(54) **BATTERY PACK, ELECTROCHEMICAL APPARATUS AND ELECTRICAL DEVICE**

(30) Priority: 23.03.2023 CN 202310293539
(71) Applicant: Xiamen Ampack Technology Limited, Xiamen City, Fujian Province 361000 (CN)
(72) Inventor: XIAO, Liangzhen, Xiamen City, Fujian Province, People s Republic of China, 361000 (CN); WANG, Shenbo, Xiamen City, Fujian Province, People s Republic of China, 361000 (CN)
(74) Representative: Icosa

(57) **Abstract**

A battery pack includes a battery, a first structural member, and a sampling assembly. The battery includes a battery shell and an electrode assembly arranged in the battery shell. The battery shell includes a bottom wall, a side wall and a top wall arranged in a first direction, and the side wall is connected to the bottom wall and the top wall. The first structural member covers at least part of the side wall. The first structural member has a first opening, and part of the surface of the side wall is exposed to the first opening. The sampling assembly includes a first sampling part, and the first sampling part is connected to a side wall through a first opening.

## Description

### TECHNICAL FIELD

This application relates to the field of battery technology, in particular to a battery pack, an electrochemical apparatus and an electrical device.

### BACKGROUND

In the current battery pack, electrode terminals of cells are usually connected by a sampling plate or a wire harness to realize the sampling of each cell. If the sampling plate is used to connect the electrode terminals, the welding process is required, which not only complicates the operation, but also affects the space utilization rate of the battery pack. If the wire harness is used to connect the electrode terminals, welding is also needed, which affects the space utilization rate of the battery pack.

### SUMMARY

In view of the above situation, it is necessary to provide a battery pack, which can simplify the sampling process and improve the space utilization rate of the battery pack.

The embodiment of this application provides a battery pack, including a battery, a first structural member and a sampling assembly. The battery includes a battery shell and an electrode assembly arranged in the battery shell. The battery shell is electrically connected to the electrode assembly. The battery shell includes a bottom wall, a side wall and a top wall arranged in a first direction, and the side wall is connected to the bottom wall and the top wall. The first structural member covers at least part of the side wall. The first structural member has a first opening, and part of the surface of the side wall is exposed to the first opening. The sampling assembly includes a first sampling part, which is connected to the side wall through the first opening.

In the above-mentioned battery pack, at least part of the battery side wall is covered with the first structural member, and part of the surface of the side wall is exposed to the first opening. The first sampling part of the sampling assembly is connected to the battery side wall through the first opening, so that the sampling assembly utilizes the side space of the battery, which is beneficial to reducing the influence of the sampling assembly on the internal space of the battery pack, and improving the space utilization rate and energy density of the battery pack.

In some embodiments of this application, the first structural member has a first side, and the first side faces the side wall; and at least part of the first sampling part is located between the side wall and the first side, and connects the side wall and the first side. The first structural member can limit the first sampling part, limit the movement of the first sampling part relative to the first opening, improve the stability of connection between the first sampling part and the side wall, and reduce the risk of sampling failure of the first sampling part.

In some embodiments of this application, the first structural member also has a second opening, part of the surface of the side wall is exposed to the second opening, and in the first direction, the first opening is apart from the second opening. The sampling assembly also includes a second sampling part, which is connected to the side wall of the same battery through the second opening. By setting the second opening and the second sampling part, the second sampling part is connected to the battery side wall through the second opening, and the second sampling part and the first sampling part sample the same battery. When one of the first sampling part and the second sampling part fails to sample, the sampling can be realized by the other, which is beneficial to improving the reliability of the sampling assembly.

In some embodiments of this application, the sampling assembly further includes a substrate, both the first sampling part and the second sampling part are disposed on the substrate, and part of the first structural member is located between the side wall and the substrate, which is beneficial to reducing the risk of short circuits between the substrate and the side wall.

In some embodiments of this application, viewed in the direction perpendicular to the surface of the substrate, the substrate is apart from the first opening, which can reduce the bending radian of the first sampling part and reduce the risk of damage to the first sampling part, and is also beneficial to reducing the volume of the substrate and reducing the influence of the substrate on the internal space of the battery pack.

In some embodiments of this application, viewed in the direction perpendicular to the surface of the substrate, the substrate is apart from the second opening, which can reduce the bending radian of the second sampling part and reduce the risk of damage to the second sampling part, and is also beneficial to reducing the volume of the substrate and reducing the influence of the substrate on the internal space of the battery pack.

In some embodiments of this application, the substrate is provided with a penetrating first through hole; the first structural member is also provided with a first convex part, the first convex part extends in the direction back away from the side wall, and the first convex part is connected to the first through hole in an inserted manner. The substrate is connected to the side wall through inserted connection of the first convex part and the first through hole, which is beneficial to improving the stability of connection between the substrate and the side wall, reducing the risk of shaking of the substrate relative to the side wall, and reducing the risk of sampling failure of the first sampling part and/or the second sampling part.

In some embodiments of this application, part of the substrate is located between the first opening and the second opening in the first direction. In the direction perpendicular to the surface of the substrate, part of the substrate faces the side wall. The substrate is arranged in the side space of the battery, which is beneficial to reducing the influence of the substrate on the internal space of the battery pack and improving the space utilization rate and energy density of the battery pack.

In some embodiments of this application, the battery pack includes a plurality of batteries stacked in a second direction perpendicular to the first direction. The first structural member covers at least part of the side wall of each battery, which is beneficial to reducing a connection apparatus between different batteries, simplifying the assembly process of the battery pack, and saving the manufacturing cost of the battery pack.

In some of the embodiments of this application, the number of first openings is multiple, the number of first sampling parts is multiple, and different first sampling parts are electrically connected to the side walls of different batteries through different first openings.

In some of the embodiments of this application, the number of second openings is multiple, the number of second sampling parts is multiple, and different second sampling parts are electrically connected to the side walls of different batteries through different second openings.

In some embodiments of this application, in the first sampling parts and the second sampling parts connected to the same side wall, a partial structure of at least one sampling part is located between the side wall and the first side and is connected to the side wall and the first side. The first structural member can limit the first sampling part and/or the second sampling part, limit the movement of the first sampling part and/or the second sampling part relative to the side wall, improve the stability of the first sampling part and/or the second sampling part connecting the side wall, and reduce the risk of sampling failure of the first sampling part and/or the second sampling part.

In some embodiments of this application, the partial structure of any first sampling part is located between the side wall and the first side, and connects the side wall and the first side, which is beneficial to improving the reliability of the sampling assembly.

In some embodiments of this application, the partial structure of any second sampling part is located between the side wall and the first side, and connects the side wall and the first side, which is beneficial to improving the reliability of the sampling assembly.

In some embodiments of this application, extension directions of the first sampling part and the second sampling part connected to the same side wall are the same. Part of the first sampling parts and part of the second sampling parts extend in the first direction, and part of the first sampling parts and part of the second sampling parts extend in the opposite direction of the first direction. Due to the different extension directions of the different first sampling parts and second sampling parts, it is beneficial to forming a buckle structure between the sampling assembly and the first structural member, improving the connection stability between the sampling assembly and the first structural member, reducing the risk of shaking of the sampling assembly relative to the battery, and improving the reliability of the sampling assembly.

In some embodiments of this application, the battery pack also includes a circuit board, which is connected to the first structural member in a third direction perpendicular to the first direction and the second direction. The circuit board is arranged on the side space of the battery, which is beneficial to reducing the influence of the circuit board on the internal space of the battery pack and improving the space utilization rate and energy density of the battery pack.

In some of the embodiments of this application, the sampling assembly also includes a connection part, the connection part is electrically connected to all the first sampling parts and all the second sampling parts, the connection part is connected to the circuit board, so that the first sampling parts and the second sampling parts are electrically connected to the circuit board, and the circuit board obtains the information of different batteries through the first sampling parts and the second sampling parts.

In some embodiments of this application, the battery pack also includes a first insulator, and at least part of the first insulator is located between the circuit board and the substrate, and connects the circuit board and the substrate. The first insulator can play an insulation protection role, reduce the risk of short circuit between the substrate and the circuit board, and improve the safety performance of the battery pack.

In one embodiment, the material of the first insulator includes rubber, silicone, polyester, epoxy or polyurethane.

In some embodiments of this application, each battery also includes an electrode terminal, which is connected to the electrode assembly and extends out of the battery shell. The electrode terminal may be configured to be connected to other structures so that the battery can be charged and discharged.

In some embodiments of this application, the battery pack also includes a second structural member, which is connected to all batteries. The second structural member can protect the battery and reduce the risk of battery damage.

In some embodiments of this application, the battery pack also includes a conductive assembly, at least part of which is located between the battery and the second structural member, and is electrically connected to the electrode terminal and the circuit board. The conductive assembly can play the role of confluence, so that all the batteries are electrically connected to the circuit board.

In some embodiments of this application, the battery pack also includes a second insulator, at least part of which is located between the conductive assembly and the second structural member, and is connected to the conductive assembly and the second structural member. The second insulator can play an insulation protection role, reduce the risk of short circuit of the battery pack, and also be beneficial to reducing the wear of conductive assembly and prolonging the service life of conductive assembly.

In some embodiments of this application, the second structural member is provided with a second convex part, and part of the conductive assembly is located between the second convex part and the battery in the first direction and connects the second convex part and the battery. The second convex part is beneficial to improving the tightness of connecting the conductive assembly to the battery, improving the stability of connecting the conductive assembly to the battery, and reducing the risk of the connection failure between the conductive assembly and the battery.

In some of the embodiments of this application, all the batteries constitute a plurality of serial modules, and the plurality of serial modules are connected in series in turn. The plurality of serial modules have a total positive terminal and a total negative terminal. The total positive terminal and the total negative terminal are not connected in series with other electrode terminals. The conductive assembly includes at least one first conductive member, a second conductive member and a third conductive member. One first conductive member connects two adjacent serial modules, the second conductive member connects the total positive terminal and the circuit board, and the third conductive member connects the total negative terminal and the circuit board.

In some embodiments of this application, in the first direction, the size of the part of the second conductive member connecting the total positive terminal is larger than the size of the first conductive member, and the size of the part of the third conductive member connecting the total negative terminal is larger than the size of the first conductive member. As the output terminals of the serial module, the second conductive member and the third conductive member increase the size in the first direction, which is beneficial to improving overcurrent capacity of the serial module, improving the charge and discharge performance of the serial module, and improving the charge and discharge performance of the battery pack.

The embodiment of this application also provides an electrochemical apparatus, including the battery pack described in any of the foregoing embodiments.

In the above electrochemical apparatus, the battery pack covers at least part of the battery side wall through the first structural member, and part of the surface of the side wall is exposed to the first opening. The first sampling part of the sampling assembly is connected to the battery side wall through the first opening, so that the sampling assembly utilizes the side space of the battery, which is beneficial to reducing the influence of the sampling assembly on the internal space of the battery pack, improving the space utilization rate and energy density of the battery pack, and reducing the influence of the battery pack on the performance of the electrochemical apparatus.

The embodiment of this application also provides an electrical device, including the aforementioned electrochemical apparatus.

In the above electrical device, the battery pack of the electrochemical apparatus covers at least part of the battery side wall through the first structural member, and part of the surface of the side wall is exposed to the first opening. The first sampling part of the sampling assembly is connected to the battery side wall through the first opening, so that the sampling assembly utilizes the side space of the battery, which is beneficial to reducing the influence of the sampling assembly on the internal space of the battery pack, improving the space utilization rate and energy density of the battery pack, reducing the influence of the battery pack on the performance of the electrochemical apparatus, and reducing the influence of the performance of the electrochemical apparatus on the electrical equipment.

### BRIEF DESCRIPTION OF DRAWINGS

FIG. 1 is a schematic structural diagram of a plurality of battery stacks in a battery pack according to an embodiment of this application.
FIG. 2 is a schematic diagram of an appearance structure of a battery according to an embodiment of this application.
FIG. 3 is a view of an III-III section in FIG. 2.
FIG. 4 is a schematic structural diagram of a battery pack according to an embodiment of this application.
FIG. 5 is an exploded view of a battery pack according to an embodiment of this application.
FIG. 6 is a vertical view of a plane formed by a battery pack in first and second directions according to an embodiment of this application.
FIG. 7 is a view of a partial structure of part of a first sampling part inserted between a side wall and a first structural member in a second direction according to an embodiment of this application.
FIG. 8 is a view of a partial structure of part of a second sampling part inserted between a side wall and a first structural member in a second direction according to an embodiment of this application.
FIG. 9 is an exploded view of a battery pack according to an embodiment of this application.
FIG. 10 is a vertical view of a plane formed by a battery pack in first and second directions according to an embodiment of this application.
FIG. 11 is an exploded view of a battery pack according to an embodiment of this application.
FIG. 12 is an exploded view of a battery pack according to an embodiment of this application.
FIG. 13 is a schematic structural diagram of a battery pack according to an embodiment of this application.
FIG. 14 is an exploded view of a structure shown in FIG. 13.
FIG. 15 is an exploded view of a structure shown in FIG. 13.
FIG. 16 is a cross-sectional view of a plane of a battery pack in first and second directions according to an embodiment of this application.
FIG. 17 is a partial enlargement of an XVII region in FIG. 16.
FIG. 18 is a partial enlargement of an XVIII region in FIG. 16.
FIG. 19 is a schematic structural diagram of a battery pack according to an embodiment of this application.
FIG. 20 is an exploded view of a structure shown in FIG. 19.
FIG. 21 is a schematic structural diagram of a second structural member and a second insulator member before assembly according to an embodiment of this application.
FIG. 22 is a schematic structural diagram of an electrochemical apparatus according to an embodiment of this application.
FIG. 23 is a schematic structural diagram of an electrical device according to an embodiment of this application.

### REFERENCE NUMERAL DESCRIPTION OF MAIN COMPONENTS

| | |
|---|---|
| Electrochemical apparatus | 100 |
| Battery pack | 10 |
| Battery | 11 |
| Battery shell | 111 |
| Bottom wall | 1111 |
| Side wall | 1112 |
| Top wall | 1113 |
| Electrode assembly | 112 |
| Electrode terminal | 113 |
| First structural member | 12 |
| First opening | 121 |
| Second opening | 122 |
| First convex part | 123 |
| Third convex part | 124 |
| First side | 125 |
| Sampling assembly | 13 |
| Substrate | 131 |
| First through hole | 1311 |
| First sampling part | 132 |
| Second sampling part | 133 |
| Connection part | 134 |
| Circuit board | 14 |
| Second through hole | 141 |
| Conductive assembly | 15 |
| First conductive member | 151 |
| Fourth convex part | 1511 |
| Second conductive member | 152 |
| Fifth convex part | 1521 |
| Third conductive member | 153 |
| Sixth convex part | 1531 |
| Serial module | 16 |
| Total positive terminal | 161 |
| Total negative terminal | 162 |
| Second structural member | 17 |
| Second convex part | 171 |
| Seventh convex part | 172 |
| Third structural member | 18 |
| Eighth convex part | 181 |
| Ninth convex part | 182 |
| Second insulator | 191 |
| Third insulator | 192 |
| Housing | 20 |
| Electric device | 200 |
| First direction | X |
| Second direction | Y |
| Third direction | Z |

This application is further described by using the following specific implementations with reference to the foregoing accompanying drawings.

### DETAILED DESCRIPTION OF EMBODIMENTS

The technical solutions in the embodiments of this application are described with reference to the accompanying drawings in the embodiments of this application. Apparently, the described embodiments are merely some rather than all of the embodiments of this application.

It is hereby noted that when a component is considered to be "connected" to another component, it can be directly connected to another component or may exist at the same time. When a component is considered to be "disposed on" another component, it can be set directly on another component or may exist at the same time. In the description of this application, unless otherwise expressly specified and limited, the terms "mounted", "connected", "connect", "fixed" and the like are to be understood in a broad sense, for example, it may be a fixed connection, or a detachable connection, or an integral connection; it may also be a mechanical connection or an electrical connection; and it may be a direct connection or indirect connection through an intermediate medium, and may be the interior communication between two elements or the interaction relationship between two elements. For a person of ordinary skill in the art, the specific meaning of the forgoing terms in this application may be understood according to specific circumstances. The term "and/or" used herein includes any and all combinations of one or more of the related listed items.

Unless otherwise defined, all technical and scientific terms used herein have the same meanings as commonly understood by a person skilled in the technical field to which this application pertains. The terms used herein in the specification of this application are merely for the purpose of describing specific embodiments and are not intended to limit this application. The terms "including" and "having" and any variations thereof in the description and claims of this application and in the description of the drawings above are intended to cover non-exclusive inclusion.

In the description of the embodiments of this application, the technical terms "first", "second", and the like are merely used to distinguish between different objects, and shall not be construed as any indication or implication of relative importance or any implicit indication of the quantity, particular sequence or primary-secondary relationship of the technical features indicated. In the description of the embodiments of this application, "a plurality of" means two or more unless otherwise expressly and specifically defined.

In this application, reference to "embodiment" means that specific features, structures or characteristics described with reference to the embodiment may be incorporated in at least one embodiment of this application. The occurrence of the phrase at various locations in the description does not necessarily all refer to the same embodiment, nor is it a separate or alternative embodiment that is mutually exclusive with other embodiments. It is hereby noted that where there is no conflict, the implementations in this application may be mutually combined.

It is hereby noted that the thickness, length, width, and other dimensions of the various components in the embodiments of this application, as well as the overall thickness, length, width, and other dimensions of an integrated apparatus, shown in the drawings, are merely exemplary illustrations and shall not constitute any limitation on this application.

The embodiment of this application provides a battery pack, including a battery, a first structural member and a sampling assembly. The battery pack includes a battery shell and an electrode assembly arranged in the battery shell. The battery shell is electrically connected to the electrode assembly. The battery shell includes a bottom wall, a side wall and a top wall arranged in a first direction, and the side wall is connected to the bottom wall and the top wall. The first structural member covers at least part of the side wall. The first structural member has a first opening, and part of the surface of the side wall is exposed to the first opening. The sampling assembly includes a first sampling part, which is connected to the side wall through the first opening.

In the above-mentioned battery pack, at least part of the battery side wall is covered with the first structural member, and part of the surface of the side wall is exposed to the first opening. The first sampling part of the sampling assembly is connected to the battery side wall through the first opening, so that the sampling assembly utilizes the side space of the battery, which is beneficial to reducing the influence of the sampling assembly on the internal space of the battery pack, and improving the space utilization rate and energy density of the battery pack.

Embodiments of this application are further illustrated below with reference to the accompanying drawings.

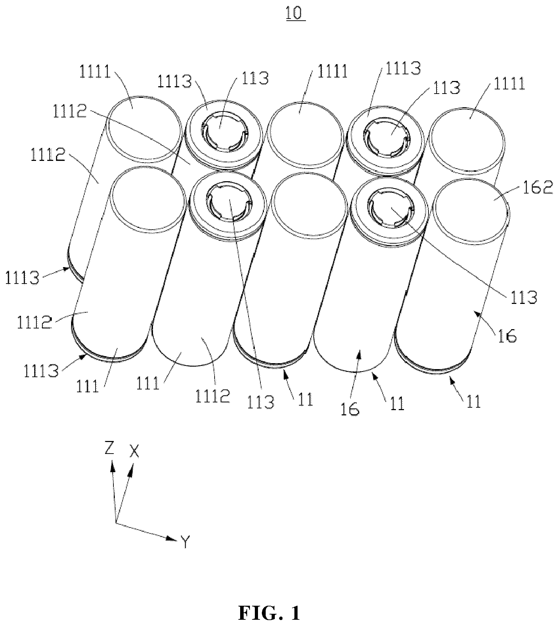

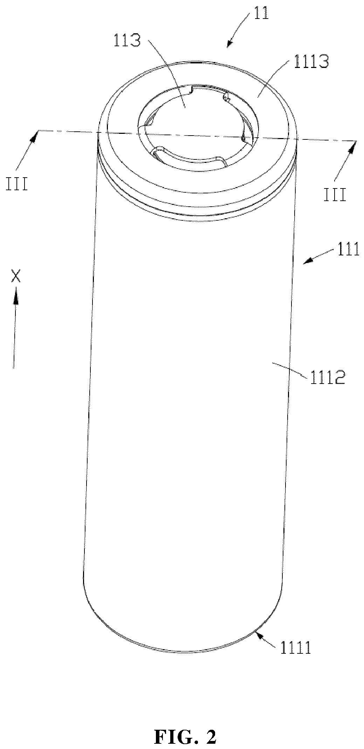

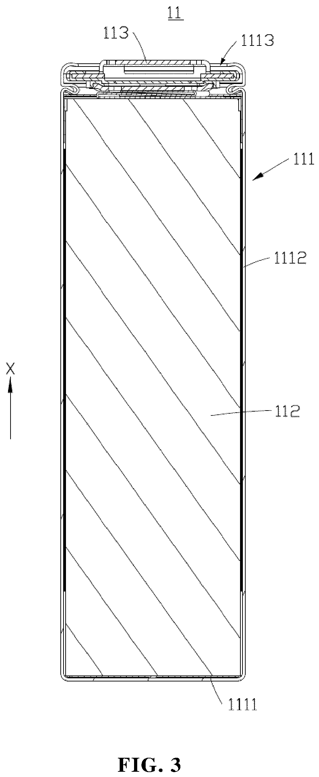

As shown in Figs. 1, 2 and 3, embodiments of this application provide a battery pack 10, including a plurality of batteries 11. Each battery 11 includes a battery shell 111 and an electrode assembly 112 disposed in the battery shell 111.The battery shell 111 is electrically connected to the electrode assembly 112. The battery shell 111 includes a bottom wall 1111, a side wall 1112 and a top wall1113 arranged in a first direction X, and the side wall 1112 is connected to the bottom wall 1111 and the top wall 1113. At least part of the batteries 11 are stacked in the second direction perpendicular to the first direction X and connected in series and/or in parallel. It is understood that the insulation connection between the battery shells 111 of adjacent batteries 11 may avoid short circuits

The electrode assembly 112 includes a first electrode plate, a second electrode plate and a separator (not shown in the figure). The separator is disposed between the first electrode plate and the second electrode plate, and the first electrode plate, the separator and the second electrode plate are wound to form the electrode assembly 112.

In one embodiment, the first electrode plate includes a first current collector and a first active layer, and the first active layer is arranged on the surface of the first current collector. Optionally, the material of the first current collector is aluminum foil. The first active layer includes one of ternary materials of lithium iron phosphate, lithium manganate, and nickel cobalt manganese.

In one embodiment, the second electrode plate includes a second current collector and a second active layer, and the second active layer is arranged on the surface of the second current collector. Optionally, the material of the second current collector is copper foil. The second active layer includes one of natural graphite, artificial graphite, mesophase micro carbon spheres, hard carbon, soft carbon, silicon, silicon-carbon composites, a Li-Sn alloy, and a Li-Sn-O alloy.

Each battery 11 also includes an electrode terminal 113, the electrode terminal 113 is electrically connected to the first electrode plate, part of the electrode terminal 113 extends out of the top wall 1113, and the battery shell 111 is electrically connected to the second electrode plate. The electrode terminal 113 may be used as the positive electrode of the battery 11, and the shell may be used as the negative electrode of the battery 11. The battery 11 may be connected to an external device through the electrode terminal 113 and the shell so as to be charged and discharged. It is understood that the insulation connection between the electrode terminal 113 and the top wall 1113 can avoid short circuits. The method of insulation connection between the electrode terminal 113 and the top wall 1113 is the common knowledge in this field, and this application will not be repeated.

In one embodiment, the material of the electrode terminal 113 includes copper or a copper alloy.

In one embodiment, the material of the shell includes aluminum or an aluminum alloy.

As shown in FIG. 1, FIG. 4 and FIG. 5, the battery pack 10 also includes a first structural member 12 and a sampling assembly 13. The first structural member 12 covers at least part of the side wall 1112 of each battery 11. The first structural member 12 has a first opening 121, and the surface of the side wall 1112 is exposed to the first opening 121. The sampling assembly 13 includes a first sampling part 132, which is connected to the side wall 1112 through the first opening 121. The first sampling part 132 is electrically connected to the battery 11 by being connected to the side wall 1112 to obtain information about the connected battery 11, such as temperature and/or voltage.

In the above-mentioned battery pack 10, at least part of the side wall 1112 of the battery 11 is covered by the first structural member 12, and part of the surface of the side wall 1112 is exposed to the first opening121. The first sampling part 132 of the sampling assembly 13 is connected to side wall 1112 of the battery 11 through the first opening 121, so that the sampling assembly 13 utilizes the side space of the battery 11, which is beneficial to reducing the influence of the sampling assembly 13 on the internal space of the battery pack 10, and improving the space utilization rate and energy density of the battery pack 10.

In addition, the first structural member12 covers at least part of the side wall 1112 of each battery 11, which is beneficial to reducing connection apparatuses between different batteries 11, simplifying the assembly process of the battery pack 10, and saving the manufacturing cost of the battery pack 10.

In one embodiment, the first structural member12 is made of an insulating material, which is beneficial to reducing the risk of short circuit of the battery pack 10. In one embodiment, the material of the first structural member 12 is plastic, which is beneficial to reducing the weight of the first structural member 12 and reducing the influence of the weight of the first structural member 12 on the battery pack 10. In one embodiment, the first structural member 12 melts and solidifies the plastic through injection molding equipment, which is beneficial to simplifying the manufacturing process of the first structural part 12 and saving the manufacturing cost of battery pack 10.

In one embodiment, the first structural member 12 is formed on the surface of the stacked batteries 11 by the injection molding process, which is beneficial to simplifying the process of connecting the first structural member 12 to the battery 11, saving the assembly cost of the battery pack 10, and further improving the stability of connecting the first structural member 12 to the battery 11 and improving the seismic performance of the battery pack 10.

In one embodiment, the material of the first structural member 12 includes, but is not limited to, any of polyethylene, polypropylene, polyvinyl chloride, polystyrene and ABS.

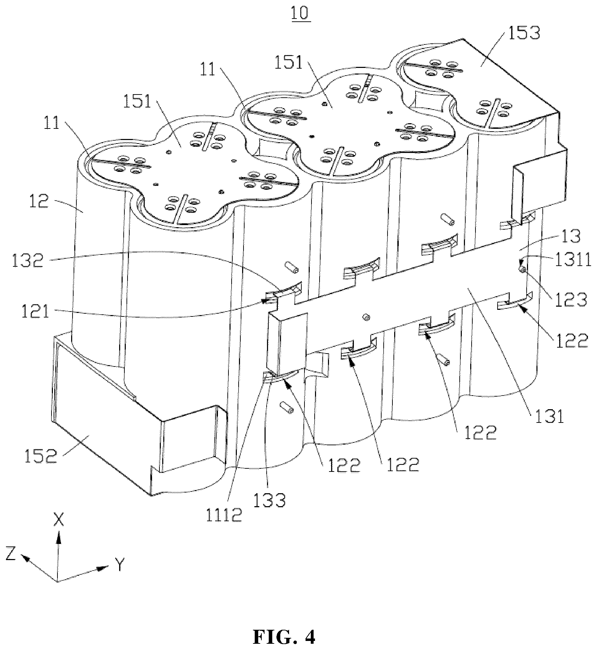

As shown in FIG. 4, FIG. 5 and FIG. 6, in one embodiment, the sampling assembly 13 also includes a substrate 131, the first structural member 132 is disposed on the substrate 131, and in the direction perpendicular to the surface of the substrate 131, the part of the first structural part 12 is located between the side wall 1112 and the substrate 131. The first structural member 12 can play the role of insulation protection and reduce the risk of short circuit between the side wall 1112 and the substrate 131.

In one embodiment, viewed in the direction perpendicular to the surface of the substrate 131, the substrate 131 is apart from the first opening 121, which can reduce the bending radian of the first sampling part 132 and reduce the risk of damage to the first sampling part 132, and is also beneficial to reducing the volume of the substrate 131 and reducing the influence of the substrate 131 on the internal space of the battery pack 10.

In one embodiment, the first structural member12 also has a second opening 122, part of the surface of the side wall 1112 is exposed to the second opening 122, and in the first direction X, the first opening 121 is apart from the second opening 122. The sampling assembly 13 also includes a second sampling part 133. The second sampling part 133 is disposed on the substrate 131. The second sampling part 133 is connected to the side wall 1112 of the same battery 11 through the second opening 122. The second sampling part 133 is electrically connected to the battery 11 by being connected to the side wall 1112, and can obtain information about the connected battery 11, such as temperature and/or voltage.

By setting the second opening 122 and the second sampling part 133, the second sampling part 133 and the first sampling part 132 sample the same battery 11, and when one of the first sampling part 132 and the second sampling part 133 fails, another sampling can be realized, which is beneficial to improving the reliability of the sampling assembly 13.

In one embodiment, viewed in the direction perpendicular to the surface of the substrate 131, and the substrate 131 is apart from the second opening 122, which can reduce the bending radian of the second sampling part 133 and reduce the risk of damage to the second sampling part 133, and is also beneficial to reducing the volume of the substrate 131 and reducing the influence of the substrate 131 on the internal space of the battery pack 10.

In one embodiment, the substrate 131 is provided with a first through hole 1311.The first structural member 12 also has a first convex part 123, the first convex part 123 extends in the direction back away from the side wall 1112, and the first convex part 123 is connected to the first through hole 1311 in an inserted manner. The substrate 131 is connected to the side wall 1112 through inserted connection between the first convex part 123 and the first through hole 1311, which is beneficial to improving the stability of connecting the substrate 131 to the side wall 1112, reducing the risk of shaking of the substrate 131 relative to the side wall 1112, and reducing the risk of sampling failure of the first sampling part 132 and/or the second sampling part 133.

In one embodiment, the number of first convex parts 123 on the first structural member 12 is multiple, and the number of first through holes 1311 on the substrate 131 is multiple. The substrate 131 is connected to the side wall 1112 through a plurality of pairs of interspersed first convex parts 123 and first through holes 1311, which is beneficial to further improving the stability of connection between the substrate 131 and the side wall 1112, reducing the risk of shaking of the substrate 131 relative to the side wall 1112, and reducing the risk of sampling failure of the first sampling part 132 and/or the second sampling part 133. Optionally, the plurality of first convex parts 123 are arranged in the second direction Y perpendicular to the first direction X, and the plurality of first through holes 1311 are arranged in the second direction Y.

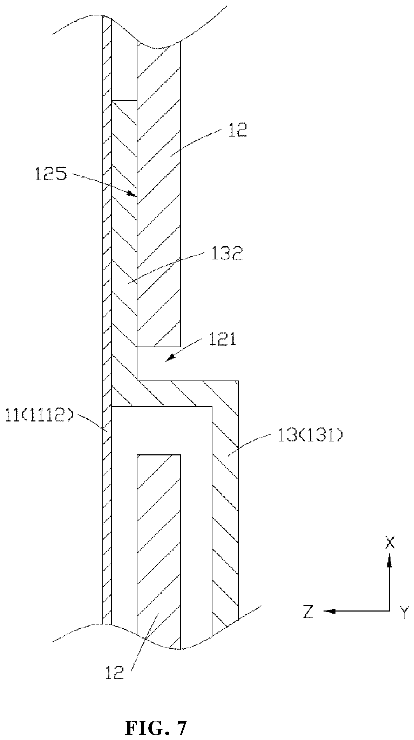

As shown in FIG. 7, in one embodiment, the first structural member 12 has a first side 125, and the first side 125 faces the side wall 1112; and at least part of the first sampling part 132 is located between the side wall 1112 and the first side 125, and connects the side wall 1112 and the first side 125. The first structural member 12 can limit the first sampling part 132, to limit the movement of the first sampling part 132 relative to the first opening 121, so as to improve the stability of connection between the first sampling part 132 and the side wall 1112, and reduce the risk of sampling failure of the first sampling part 132.

In one embodiment, the first side 125 can exert pressure on the first sampling part 132, which is beneficial to further improving stability of connection between the first sampling part 132 and the side wall 1112 and reducing the risk of sampling failure of the first sampling part 132.

In one embodiment, the first sampling part 132 makes contact with and is connected to the first side 125 of the first structural member 12, which is beneficial to the insertion of the first sampling part 132 between the side wall 1112 and the first side 125 and the extraction from the side wall 1112 and the first side 125, so as to facilitate assembly.

In one embodiment, the surface of the first sampling part 132 is provided with viscose (not shown in the figure). The first sampling part 132 is connected to the first side 125 by the viscose, which is beneficial to improving stability of connecting the first sampling part 132 to the side wall 1112 and the first side 125, reducing the risk of sampling failure of the first sampling part 132, and improving the seismic performance of an electrochemical apparatus 100.

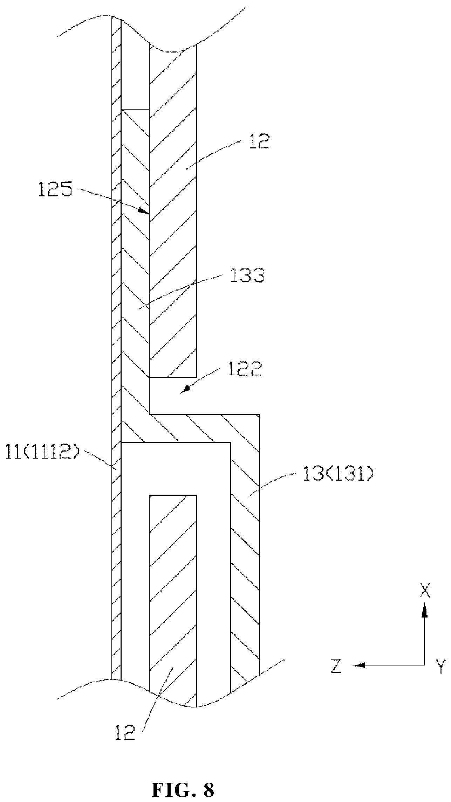

As shown in FIG. 8, in one embodiment, at least part of the second sampling part 133 is located between the side wall 1112 and the first side 125, and is connected to the side wall 1112 and the first side 125. The first structural member 12 can limit the second sampling part 133 to limit the movement of the second sampling part 133 relative to the second opening 122, so as to improve the stability of connection between the second sampling part 133 and the side wall 1112, and reduce the risk of sampling failure of the second sampling part 133.

In one embodiment, the first side 125 can exert pressure on the second sampling part 133, which is beneficial to further improving the stability of connecting the second sampling part 133 to the side wall 1112 and reducing the risk of sampling failure of the second sampling part 133.

In one embodiment, the second sampling part 133 makes contact with and is connected to the first side 125 of the first structural member 12, which is beneficial to the insertion of the second sampling part 133 between the side wall 1112 and the first side 125 and the extraction from the side wall 1112 and the first side 125, so as to facilitate assembly.

In one embodiment, the surface of the second sampling part 133 is provided with viscose (not shown in the figure). The second sampling part 133 is connected to the first side 125 by the viscose, which is beneficial to improving the stability of connecting the second sampling part 133 to the side wall 1112 and the first side 125, reducing the risk of sampling failure of the second sampling part 133, and improving the seismic performance of the electrochemical apparatus 100.

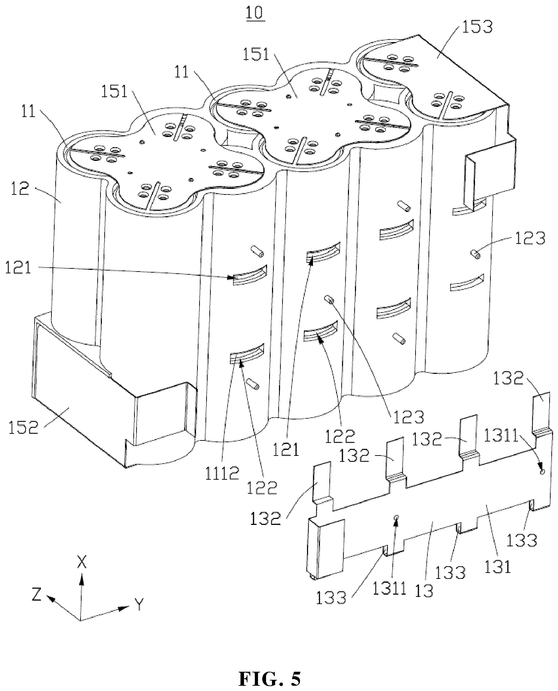

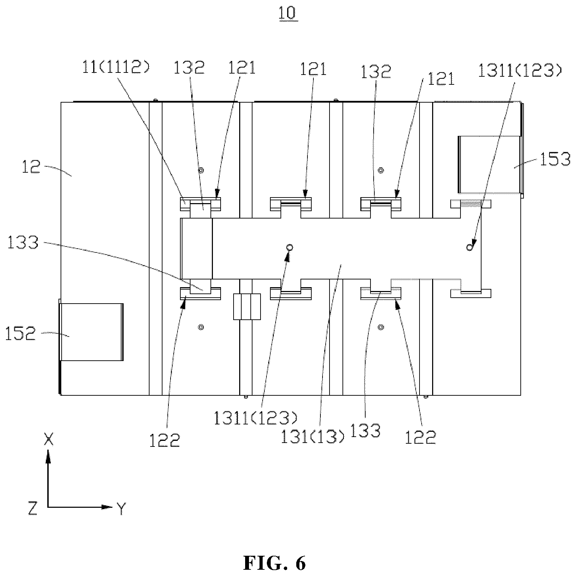

Please continue to refer to FIG. 5 and FIG. 6. In one embodiment, the number of first openings 121 is multiple, and the plurality of first openings 121 are arranged in the second direction Y. Each first opening 121 corresponds to one side wall 1112 of one battery 11, and the plurality of batteries 11 stacked in the second direction Y reveal a part of respective side walls 1112 through different first openings 121. The number of first sampling parts 132 is multiple, and the plurality of first sampling parts 132 are arranged in the second direction Y. Each first sampling part 132 corresponds to different first openings 121, so that different first sampling parts 132 can be connected to the side walls 1112 of different batteries 11 through different first openings 121, so that the sampling assembly 13 can obtain the plurality of battery 11 information and improve the safety performance of the battery pack 10.

In one embodiment, the number of second openings 122 is multiple, and the plurality of second openings 122 are arranged in the second direction Y. Each second opening 122 corresponds to one side wall 1112 of one battery 11, and the plurality of batteries 11 stacked in the second direction Y reveal a part of respective side walls 1112 through different second openings 122. The number of second sampling parts 133 is multiple, and the plurality of second sampling parts 133 are arranged in the second direction Y. Each second sampling part 133 corresponds to different second openings 122, so that different second sampling parts 133 can be connected to the side walls 1112 of different batteries 11 through different second openings 122.

The plurality of second sampling parts 133 and the plurality of first sampling parts 132 cooperate with each other, so that at least part of the batteries 11 are connected to one first sampling part 132 and one second sampling part 133 at the same time, which is beneficial to reducing the risk of sampling failure of the sampling assembly 13 to a certain battery 11 and improving the reliability of the sampling assembly 13.

In one embodiment, for the first sampling part 132 and the second sampling part 133 connected to the side wall 1112 of the same battery 11, in the direction perpendicular to the surface of the substrate 131, the partial structure of at least one is located between the side wall 1112 and the first structural member 12, and is connected to the side wall 1112 and the first side 125 of the first structural member 12. The first structural member 12 can limit the first sampling part 132 and/or the second sampling part 133 to limit the movement of the first sampling part 132 and/or the second sampling part 133 relative to the side wall 1112, so as to improve the stability of connecting the first sampling part 132 and/or the second sampling part 133 to the side wall 1112, and reduce the risk of sampling failure of the first sampling part 132 and/or the second sampling part 133. Optionally, for the first sampling part 132 and the second sampling part 133 connected to the side wall 1112 of the same battery 11, the partial structure of the two is located between the side wall 1112 and the first structural member 12, and makes contact with and is connected to the side wall 1112 and one side of the first structural member 12 facing the side wall 1112.

In one embodiment, in the direction perpendicular to the surface of the substrate 131, the partial structure of any first sampling part 132 is located between the side wall 1112 and the first structural member 12, and is connected to the side wall 1112 and the first side 125 of the first structural member 12 (as shown in FIG. 7), which is beneficial to improving the reliability of the sampling assembly 13.

In one embodiment, in the direction perpendicular to the surface of the substrate 131, the partial structure of any second sampling part 133 is located between the side wall 1112 and the first structural member 12, and is connected to the side wall 1112 and the first side 125 of the first structural member 12 (as shown in FIG. 8), which is beneficial to improving the reliability of the sampling assembly 13.

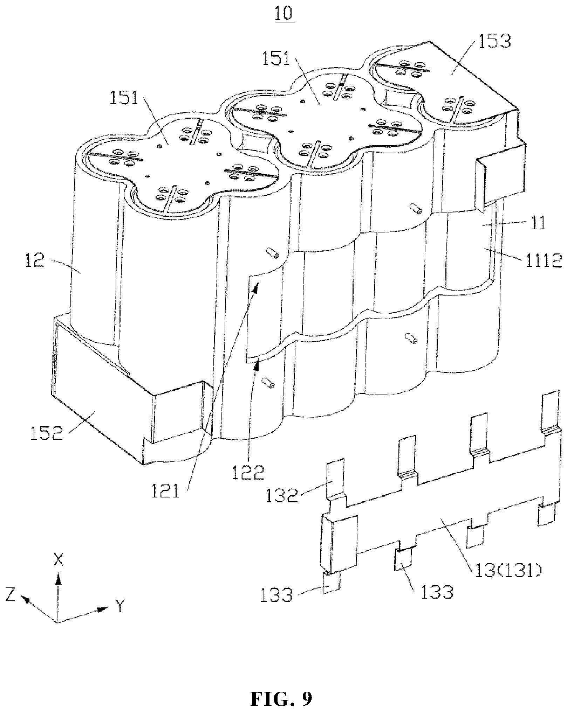

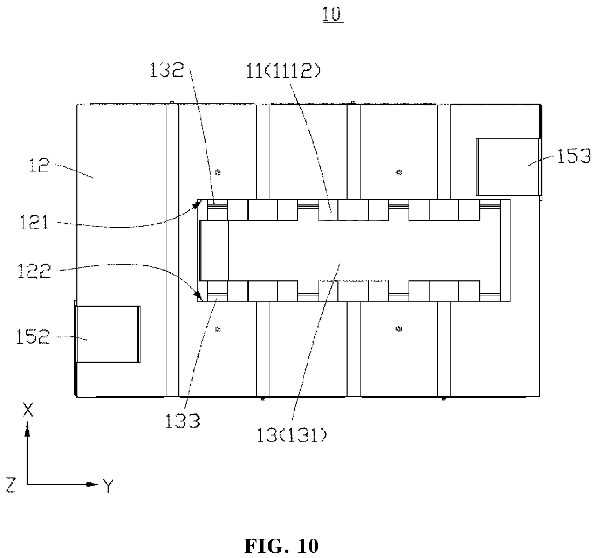

As shown in FIG. 9 and FIG. 10, in one embodiment, the first opening 121 and the second opening 122 are communicated with each other. Part of the substrate 131 is located between the first opening 121 and the second opening 122 in the first direction X, and faces the side wall 1112. The substrate 131 is arranged in the side space of the battery 11, which is beneficial to reducing the influence of the substrate 131 on the internal space of the battery pack 10 and improving the space utilization and energy density of the battery pack 10. It is understood that the insulating connection between the substrate 131 and the side wall 1112 can avoid a short circuit between the sampling assembly 13 and the side wall 1112 of the battery 11. Optionally, the substrate 131 is indirectly connected to the side wall 1112 through an insulator (not shown in the figure).

Viewed in the direction perpendicular to the surface of the substrate 131, the substrate 131 is apart from the first structural member 12, which is beneficial to reducing the influence of the substrate 131 on the internal space of the battery pack 10 and improving the space utilization and energy density of the battery pack 10.

As an example, the following is further illustrated by the example of part of the first structural member 12 located between the side wall 1112 and the substrate 131 (as shown in FIG. 5).

As shown in FIG. 5, in one embodiment, a first sampling part 132 and a second sampling part 133 connected to the same side wall 1112 are opposite in the first direction X, forming a pair of sampling parts, and a plurality of pairs of sampling parts are arranged in the second direction Y.

In one embodiment, the extension direction of the first sampling part 132 and the second sampling part 133 paired in the first direction X is the same.

In one embodiment, all the first sampling parts 132 and all the second sampling parts 133 extend in the first direction X. When assembling and connecting the sampling assembly 13, the first sampling parts 132 and the second sampling parts 133 are inserted between the side wall 1112 and the first structural member 12 in the first direction X, which is beneficial to improving the insertion speed and assembly efficiency.

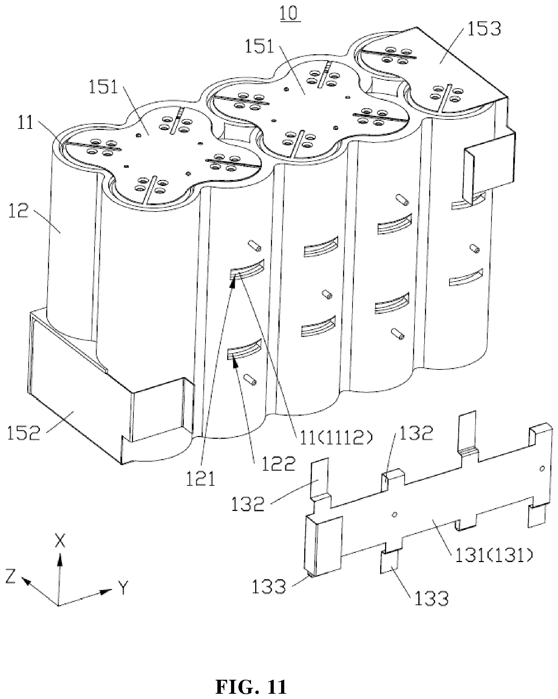

As shown in FIG. 11, in one embodiment, part of the paired sampling parts extend in the first direction X, and part of the paired sampling parts extend in the opposite direction of the first direction X. The different pairs of sampling parts are different in extension directions, which is beneficial to forming a buckle structure between the sampling assembly 13 and the first structural member 12, and improving the stability of connection between the sampling assembly 13 and the first structural member 12, reducing the risk of shaking of the sampling assembly 13 relative to the battery 11, and improving the reliability of the sampling assembly 13. Optionally, in the second direction Y, the extension directions of the two adjacent pairs of sampling parts are opposite.

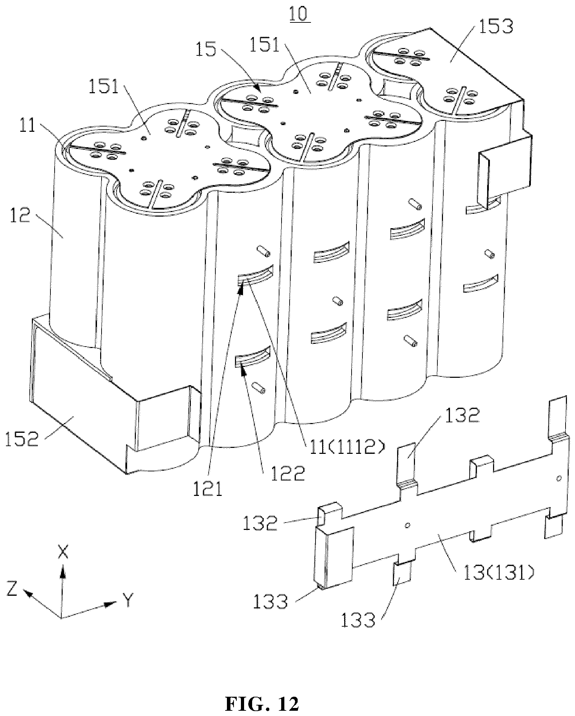

As shown in FIG. 12, in one embodiment, part of the first sampling part 132 and the second sampling part 133 in pairs in the first direction X have opposite extension directions, which is beneficial to forming a buckle structure between the first sampling part 132, the second sampling part 133 and the first structural member 12 connected to the side wall 1112 of the same battery 11, improving the stability of connection between the sampling assembly 13 and the first structural member12, reducing the risk of shaking of the sampling assembly 13 relative to the battery 11, and improving the reliability of the sampling assembly 13.

In one embodiment, part of the first sampling part 132 and the second sampling part 133 in pairs in the first direction X are bent in opposite directions, and part of the first sampling part 132 and the second sampling part 133 in pairs in the first direction X are bent away from each other. By bending different pairs of sampling parts in opposite directions or deviating from each other, it is beneficial to forming a buckle structure between the sampling assembly 13 and the first structural member 12, improving the stability of connection between the sampling assembly 13 and the first structural member 12, reducing the risk of shaking of the sampling assembly 13 relative to the battery 11, and improving the reliability of the sampling assembly 13.

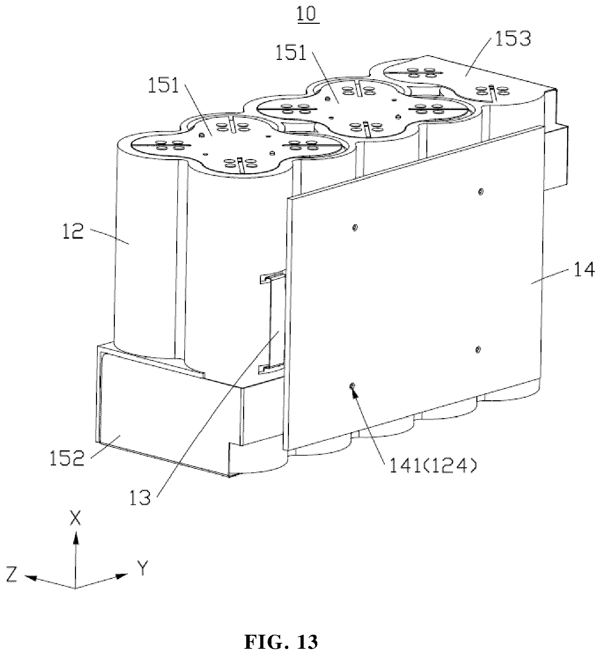

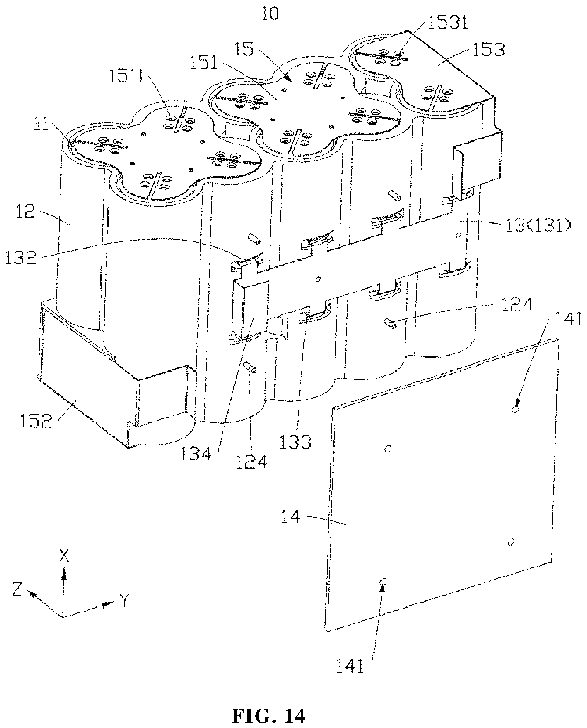

As shown in FIG. 13 and FIG. 14, in one embodiment, the battery pack 10 also includes a circuit board 14, and the circuit board 14 is connected to the first structural member 12 in the third direction Z perpendicular to the first direction X and the second direction Y. In order to reduce the influence of the circuit board 14 on the internal space of battery pack 10 and improve the space utilization and energy density of battery pack 10, the circuit board 14 is arranged on the side space of the battery 11.

The circuit board 14 is electrically connected to all the batteries 11, which can control the charge and discharge of each battery 11 in the battery pack 10. In one embodiment, the circuit board 14 includes a battery management system (BMS) assembly. The BMS assembly includes a plurality of electron components, and the plurality of electronic components can realize functions of data acquisition, control, protection, communication, power calculation, signal transmission, power transmission, etc. for the batteries 11.

In one embodiment, the sampling assembly 13 also includes a connection part 134, the connection part 134 is electrically connected to all the first sampling parts 132 and all the second sampling parts 133, the connection part 134 is connected to the circuit board 14, so that all the first sampling parts 132 and all the second sampling parts 133 are electrically connected to the circuit board 14, and the circuit board 14 obtains the information of different batteries 11 through the first sampling parts 132 and the second sampling parts 133.

In one embodiment, the circuit board 14 is provided with a second through hole 141. The first structural member 12 also has a third convex part 124, the third convex part 124 extends in the direction from the side wall 1112, and the third convex part 124 is plugged into the second through hole 141. The circuit board 14 is plugged into the second through hole 141 through inserted connection between the third convex part 124 and the side wall 1112, which is beneficial to improving the stability of connecting the circuit board 14 to the side wall 1112, reducing the risk of shaking the circuit board 14 relative to the side wall 1112, and improving the seismic performance of the battery pack 10.

In one embodiment, the number of third convex parts 124 on the first structural member 12 is multiple, and the number of second through holes 141 on the circuit board 14 is multiple. The circuit board 14 is connected to the side wall 1112 through a plurality of pairs of mutually inserted third convex parts 124 and the second through hole 141, which is beneficial to further improving the stability of connection between the circuit board 14 and the side wall 1112, reducing the risk of shaking of the circuit board 14 relative to the side wall 1112, and improving the seismic performance of the battery pack 10.

In one embodiment, the circuit board 14 and the sampling assembly 13 are located on the same side of the battery pack 10 in the third direction Z, and the substrate 131 is located between the circuit board 14 and the plurality of batteries 11, which is beneficial to improving the space utilization rate of the battery pack 10 and improving the energy density of the battery pack 10.

In one embodiment, the battery pack 10 also includes a first insulator (not shown in the figure). At least part of the first insulator is located between the circuit board 14 and the substrate 131, and connects the circuit board 14 and the substrate 131. The first insulator can play an insulation protection role to reduce the risk of short circuit between the substrate 131 and the circuit board 14, and improve the safety performance of the battery pack 10.

In one embodiment, the first insulator is formed on the surface of the circuit board 14 by coating. Optionally, the first insulator is formed after curing by three-proof paint. In one embodiment, the first insulator is sheet-like rubber, and at least part of the first insulator is located between the circuit board 14 and the substrate 131. When playing an insulating role, the first insulator can also play a role of buffer protection and reduce the risk of collision damage between the circuit board 14 and the substrate 131.

In one embodiment, in the third direction Z, the battery pack 10 and the substrate 131 are located on the opposite sides of the stacked batteries 11 (not shown in the figure), which is beneficial to reducing the risk of short circuit between the substrate 131 and the circuit board 14 and improving the safety performance of the battery pack 10, and is also beneficial to using the side space of the stacked batteries 11 to improve the space utilization of the battery pack 10 and increase the energy density of the battery pack 10.

As shown in FIG. 1, FIG. 14 and FIG. 15, in one embodiment, part of the bottom wall 1111 of the battery 11 is exposed to the first structural member 12, and part of the electrode terminal 113 is exposed to the first structural member. The battery pack 10 also includes a conductive assembly 15, and the conductive assembly 15 is electrically connected to the battery 11 and the circuit board 14. The conductive assembly 15 can act as a confluence, so that all the batteries 11 are electrically connected to the circuit board 14.

In one embodiment, the plurality of batteries 11 constitute a plurality of serial modules 16, and the plurality of series assemblies 16 are stacked in the second direction Y and connected in series.

In one embodiment, the conductive assembly 15 includes a plurality of first conductive member 151, and two adjacent serial modules 16 are connected to the same first conductive member 151, and the series connection is realized through the first conductive member 151.

In one embodiment, each serial module 16 includes a plurality of batteries 11, and all batteries 11 in the same serial module 16 are connected in parallel. Optionally, the plurality of batteries 11 in each serial module 16 are stacked in the third direction Z.

In the same serial module 16, all the electrode terminals 113 of the batteries 11 are located on the same side, all the bottom walls 1111 of the batteries 11 are located on the other side, and all the electrode terminals 113 or all the bottom walls 1111 are connected to the same first conductive member 151, so that all the batteries 11 are connected in parallel. Optionally, the same serial module 16 includes two batteries 11, and the two batteries 11 are stacked in the third direction Z.

In one embodiment, in two adjacent serial modules 16, the electrode terminal 113 of one serial module 16 and the bottom wall 1111 of the other serial module 16 are located on the same side and connected by the same first conductive member 151, so that the two adjacent serial modules 16 are connected in series. The plurality of serial modules 16 are arranged in the second direction Y. Viewed in the first direction X, the electrode terminals 113 and the bottom wall 1111 of different serial modules 16 are arranged alternately.

Each battery 11 in the battery pack 10 is connected in series and/or in parallel, which is beneficial to optimizing the layout, reducing the number and structural complexity of the first conductive member 151, not only saving costs, but also improving the space utilization of the battery pack 10 and increasing the energy density of the battery pack 10.

In one embodiment, a fourth convex part 1511 is disposed on the first conductive member 151, and the fourth convex part 1511 is extended to the battery 11 and makes contact with and is connected to the electrode terminal 113 or the bottom wall 1111. By setting the fourth convex part 1511 extending towards the battery 11 on the first conductive member 151, it is beneficial to improving the tightness of connecting between the first conductive member 151 and the electrode terminal 113 or the bottom wall 1111, improving the stability of connection between the first conductive member 151 and the battery 11, and improving the seismic performance of the battery pack 10.

In one embodiment, the number of fourth convex parts 1511 on the first conductive member 151 is multiple, and at least two fourth convex parts 1511 are connected to the same electrode terminal 113 or the same bottom wall 1111, which is beneficial to further improving the stability of electrical connection between the first conductive member 151 and the battery 11 and improving the seismic performance of the battery pack 10.

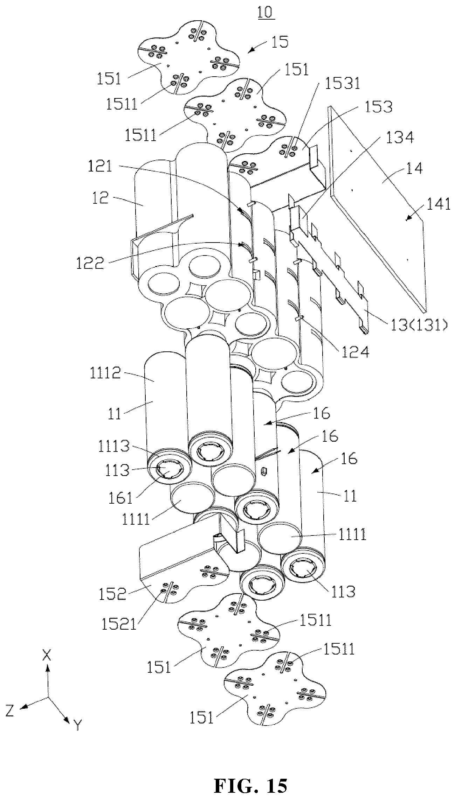

In one embodiment, the plurality of serial modules 16 are connected in series to form a total positive terminal 161 (shown in FIG. 15) and a total negative terminal 162 (shown in FIG. 1). The total positive terminal 161 and the total negative terminal 162 are not connected in series with other electrode terminals 113.

The conductive assembly 15 also includes a second conductive member 152 and a third conductive member 153. The second conductive member 152 is connected to the total positive terminal 161 and the circuit board 14, and the third conductive member 153 is connected to the total negative terminal 162 and the circuit board 14, so that the circuit board 14 is electrically connected to all the batteries 11, so as to control all the batteries 11 to be charged and discharged.

In one embodiment, a fifth convex part 1521 is disposed on the second conductive member152, and the fifth convex part 1521 is extended to the battery 11 and makes contact with and is connected to the total positive terminal 161. By setting the fifth convex 1521 extending towards the battery 11 on the second conductive member 152, it is beneficial to improving the tightness of connection between the second conductive member 152 and the total positive terminal 161, improving the stability of electrical connection between the second conductive member 152 and the battery 11, and improving the seismic performance of the battery pack 10.

In one embodiment, the number of fifth convex parts 1521 on the second conductive member 152 is multiple, and all the fifth convex parts 1521 are connected to the total positive terminal 161, which is beneficial to further improving the stability of electrical connection between the second conductive member 152 and the battery 11 and improving the seismic performance of the battery pack 10.

In one embodiment, a sixth convex part 1531 is disposed on the third conductive member 153, and the sixth convex part 1531 is extended to the battery 11 and is connected to the total negative terminal 162. By setting the sixth convex part 1531 extending towards battery 11 on the third conductive member 153, it is beneficial to improving the tightness of connection between the third conductive member153 and the total negative terminal 162, improving the stability of electrical connection between the third conductive member 153 and the battery 11, and improving the seismic performance of the battery pack 10.

In one embodiment, the number of sixth convex parts 1531 on the third conductive member 153 is multiple, and all the sixth convex parts1531 are connected to the total negative terminal 162, which is beneficial to further improving the stability of electrical connection between the third conductive members 153 and the battery 11 and improving the seismic performance of the battery pack 10.

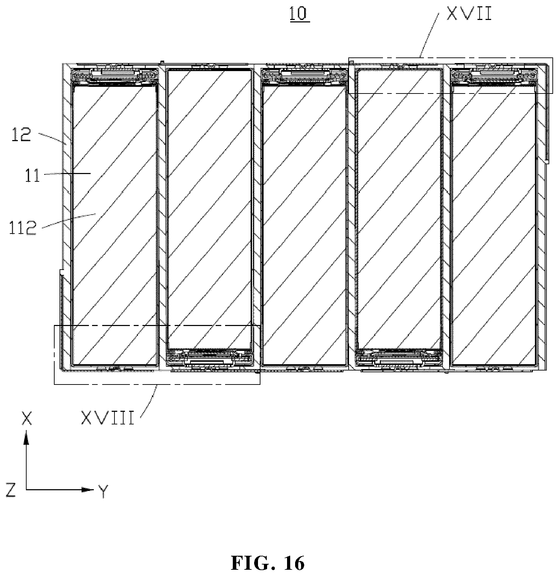

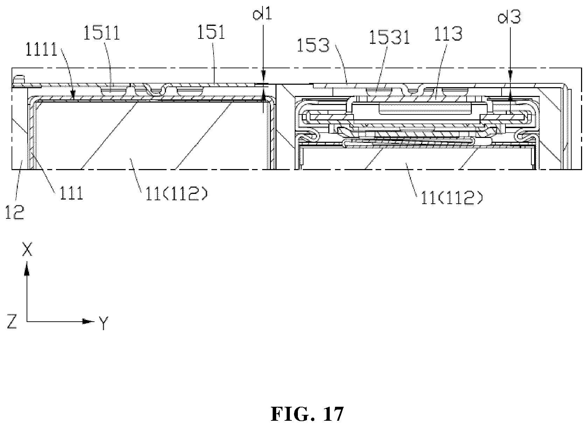

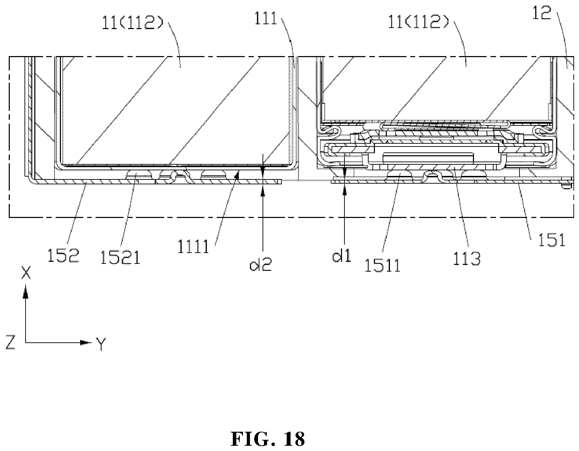

As shown in FIG. 16, FIG. 17 and FIG. 18, in one embodiment, in the first direction X, the thickness of the first conductive member 151 is d1, the thickness of the second conductive member 152 is d2, the thickness of the third conductive member 153 is d3, d2 > d1, and d3 > d1. The second conductive member152 and the third conductive member 153 are used as output terminals of the serial module 16, and increasing the thicknesses thereof is beneficial to improving the overcurrent capacity, improving the charge and discharge performance of the serial module 16, and improving the charge and discharge performance of the battery pack 10.

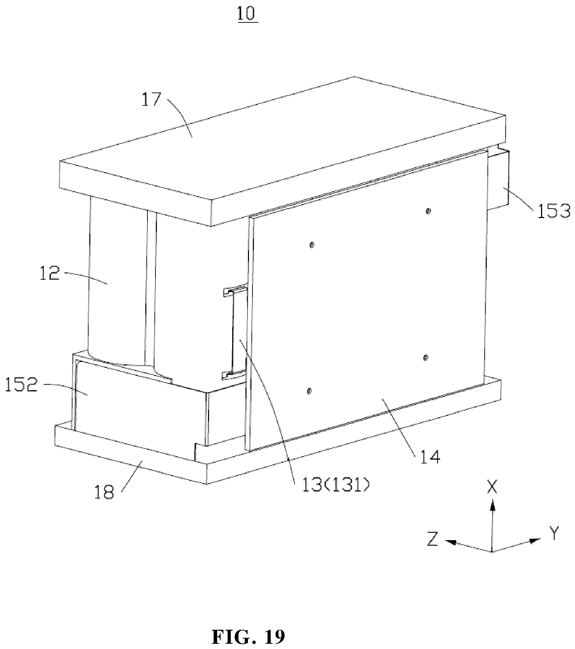

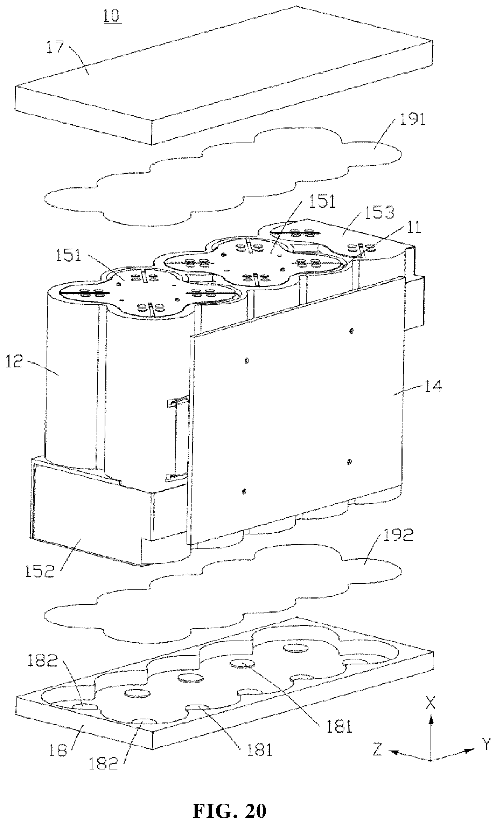

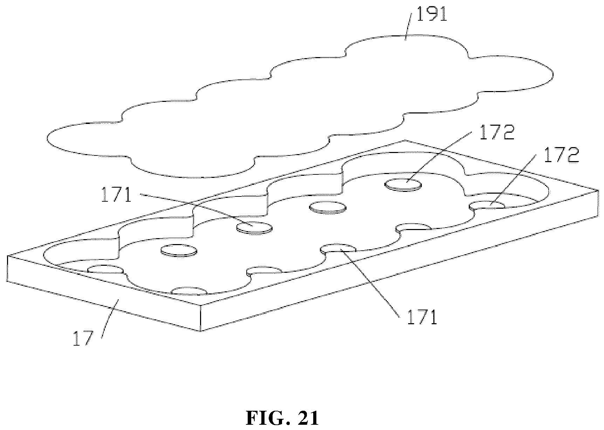

As shown in FIG. 19, FIG. 20 and FIG. 21, in one embodiment, the battery pack 10 also includes a second structural member 17, the second structural member 17 and the stacked batteries 11 are arranged in the first direction X, and the second structural member 17 is connected to all the batteries 11, and covers the end portions of all the batteries 11 in the first direction X, part of the first conductive member 151 and part of the third conductive member 153. The second structural member 17 can protect the end portions of the batteries 11 in the first direction X, part of the first conductive member 151 and part of the third conductive member 153, reduce the risk of damage to the batteries 11, and improve the stability of connecting the first conductive member 151 and the third conductive member 153 to the batteries 11, and improve the seismic performance of the battery pack 10.

In one embodiment, the battery pack 10 further includes a third structural member 18, the third structural member 18 and the stacked batteries 11 are arranged in the opposite direction of the first direction X, and the third structural member 18 is connected to all the batteries 11 and covers the end portions of all the batteries 11 in the opposite direction of the first direction X, part of the first conductive member 151 and part of the second conductive member 152. The third structural member 18 can play a protective role for the end portions of the batteries 11 in the opposite direction of the first direction X, part of the first conductive member 151 and part of the second conductive member 152, reduce the risk of collision and damage to the batteries 11, and improve the stability of connecting the first conductive member 151 and the second conductive member 152 to the batteries 11, and improve the seismic performance of the battery pack 10.

In one embodiment, part of the second conductive member 152 is disposed between the second structural member 17 and the battery 11 in the first direction X. The second structural member 17 can play a protective role for the second structural member 152, and can also improve the stability of connection between the second conductive member 152 and the battery 11, and improve the seismic performance of the battery pack 10.

In one embodiment, part of the third conductive member 153 is disposed between the third structural member 18 and the battery 11 in the first direction X. The third structural member 18 can play a protective role for the third conductive member 153, and can also improve the stability of connection between the third conductive member153 and the battery 11, and improve the seismic performance of the battery pack 10.

In one embodiment, the battery pack 10 also includes a second insulator 191, and at least part of the second insulator 191 is located between the first conductive member 151 and the second structural member 17 in the first direction X, and connects the first conductive member 151 and the second structural member 17. The second insulator 191 can play the role of insulation protection, reduce the risk of short circuit in the battery pack 10, and also is beneficial to reducing the wear of the first conductive member 151 and prolonging the service life of the first conductive member 151.

In one embodiment, at least part of the second insulator 191 is located between the third conductive member 153 and the second structural member 17 in the first direction X, and connects the third conductive member 153 and the second structural member 17. The second insulator 191 can play the role of insulation protection, reduce the risk of short circuit in the battery pack 10, and also is beneficial to reducing the wear of the third conductive member 153 and prolonging the service life of the third conductive member 153.

In one embodiment, the battery pack 10 also includes a third insulator 192, and at least part of the third insulator 192 is located between the first conductive member 151 and the third structural member 18 in the first direction X, and connects the first conductive member 151 and the third structural member 18. The third insulator 192 can play the role of insulation protection, reduce the risk of short circuit in the battery pack 10, and also is beneficial to reducing the wear of the first conductive member 151 and prolonging the service life of the first conductive member 151.

In one embodiment, at least part of the third insulator 192 is located between the second conductive member 152 and the third structural member 18 in the first direction X, and connects the second conductive member 152 and the third structural member 18. The third insulator 192 can play the role of insulation protection, reduce the risk of short circuit in the battery pack 10, and also is beneficial to reducing the wear of the second conductive member 152 and prolonging the service life of the second conductive member 152.

In one embodiment, in one embodiment, the second structural member 17 is provided with a second convex part 171, the second convex part 171 is extended towards the battery 11, and part of the second insulator 191 is located between the second convex part 171 and the first conductive member 151 in the first direction X, and connects the second convex part 171 and the first conductive member 151. The second convex part 171 is beneficial to improving the tightness of connecting the first conductive member 151 to the battery 11, improving the stability of connecting the first conductive member 151 to the battery 11, and reducing the risk of connection failure between the first conductive member 151 and the battery 11.

In one embodiment, in one embodiment, the second structural member 17 is also provided with a seventh fifth convex part 172, the seventh convex part 172 is extended towards the battery 11, and part of the second insulator 191 is located between the seventh convex part 172 and the third conductive member 153 in the first direction X, and connects the seventh convex part 172 and the third conductive member 153. The seventh convex part 172 is beneficial to improving the tightness of connecting the third conductive member 153 to the battery 11, improving the stability of the third conductive member 153 to connect battery 11, and reducing the risk of connection failure between the third conductive member 153 and the battery 11.

In one embodiment, the third structural member 18 is provided with an eighth convex part 181, and the eighth convex part 181 is extended towards the battery 11. Part of the third insulator 192 is located between the eighth convex part 181 and the first conductive member 151 in the first direction X, and connects the eighth convex part 181 and the first conductive member 151. The eighth convex 181 is beneficial to improving the tightness of connecting the first conductive member 151 to the battery 11, improving the stability of connecting the first conductive component 151 to the battery 11, and reducing the risk of connection failure between the first conductive component 153 and the battery 11.

In one embodiment, the third structural member 18 is further provided with a ninth convex part 182, and the ninth convex part 182 extends towards the battery 11. Part of the third insulator 192 is located between the ninth convex part 182 and the second conductive member 152 in the first direction X, and connects the ninth convex part 182 and the second conductive member 152. The ninth convex part 182 is beneficial to improving the tightness of connecting the second conductive member 152 to the battery 11, improving the stability of connecting the second conductive member 152 to the battery 11, and reducing the risk of connection failure between the second conductive member 152 and the battery 11.

In one embodiment, the second structural member17 is made of an insulating material, which is beneficial to reducing the risk of short circuit of the battery pack 10. In one embodiment, the second structural member 17 is formed by solidifying after plastic melts through injection molding equipment, which is beneficial to simplifying the manufacturing process of the second structural member 17 and saving the manufacturing cost of the battery pack 10.

In one embodiment, the third structural member 18 is made of an insulating material, which is beneficial to reducing the risk of short circuit of the battery pack 10. In one embodiment, the third structural member 18 is formed by solidifying after plastic melts through the injection molding equipment, which is beneficial to simplifying the manufacturing process of the third structural member 18 and saving the manufacturing cost of the battery pack 10.

In one embodiment, the material of the second insulator 191 includes rubber, silicone, polyester, epoxy or polyurethane.

In one embodiment, the material of the third insulator 192 includes rubber, silicone, polyester, epoxy or polyurethane.

In summary, in the battery pack 10 of this application, at least part of the side wall1112 of the battery 11 is covered by the first structural member 12, and part of the surface of the side wall 1112 is exposed to the first opening 121. The first sampling part 132 of the sampling assembly 13 is connected to the side wall 1112 of the battery 11 through the first opening 121, so that the sampling assembly 13 utilizes the side space of the battery11, which is beneficial to reducing the influence of the sampling assembly 13 on the internal space of the battery pack 10, and improve the space utilization rate and energy density of the battery pack 10.

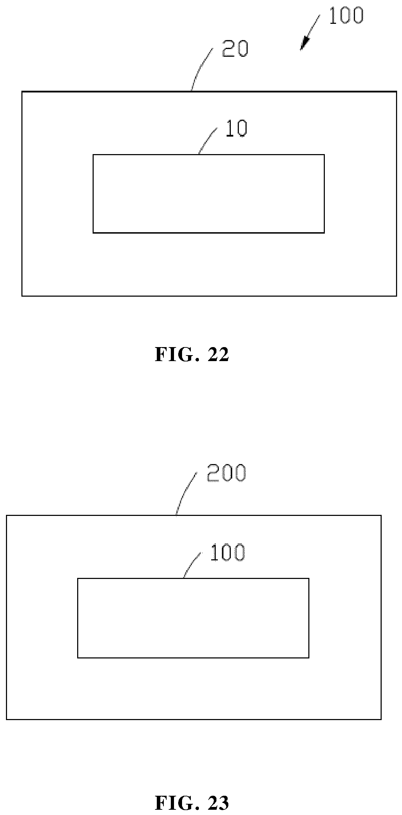

As shown in FIG. 22, the embodiment of this application also provides an electrochemical apparatus 100, including the battery pack 10 described in any of the aforementioned embodiments.

In the above electrochemical apparatus 100, the battery pack 10 covers at least part of the side wall 1112 of the battery 11 through the first structural member 12, and part of the surface of the side wall 1112 is exposed to the first opening 121. The first sampling part 132 of the sampling assembly 13 is connected to the side wall 1112 of the battery 11 through the first opening 121, so that the sampling assembly 13 utilizes the side space of the battery 11, which is beneficial to reducing the influence of the sampling assembly 13 on the internal space of the battery pack 10, improving the space utilization and energy density of the battery pack 10, and reducing the influence of the battery pack 10 on the performance of the electrochemical apparatus 100.

In one embodiment, the electrochemical apparatus 100 includes a housing 20, and the battery pack 10 is arranged in the housing 20. The housing 20 can protect the battery pack 10, which is beneficial to reducing the influence of foreign objects on the performance of the battery pack 10 and prolonging the service life of the battery pack 10.

As shown in FIG. 23, the embodiment of this application also provides an electrical device 200, including the aforementioned electrochemical apparatus 100.

In the above electrical device 200, the battery pack 10 of the electrochemical apparatus 100 covers at least part of the side wall 1112 of the battery 11 through the first structural member 12, and part of the surface of the side wall 1112 is exposed to the first opening 121. The first sampling part 132 of the sampling assembly 13 is connected to the side wall 1112 of the battery 11 through the first opening 121, so that the sampling assembly 13 utilizes the side space of the battery 11, which is beneficial to reducing the influence of the sampling assembly 13 on the internal space of the battery pack 10, improving the space utilization and energy density of the battery pack 10, reducing the influence of the battery pack 10 on the performance of the electrochemical apparatus 100, and reducing the influence of the performance of the electrochemical apparatus 100 on the electrical device 200.

In addition, other changes may be made by persons skilled in the art within the spirit of this application, and certainly, these changes made in accordance with the spirit of this application shall be included in the scope disclosed in this application.

## Claims

1. A battery pack(10), comprising:
a battery(11), comprising a battery shell(111) and an electrode assembly(112) arranged in the battery shell(111), wherein the battery shell(111) is electrically connected to the electrode assembly(112); the battery shell(111) comprises a bottom wall(1111), a side wall(1112); and a top wall(1113) arranged in a first direction(X), and the side wall(1112) is connected to the bottom wall(1111) and the top wall(1113);
a first structural member(12), covering at least a part of the side wall(1112), wherein the first structural member(12) has a first opening(121), and a part of a surface of the side wall(1112) is exposed to the first opening(121); and
a sampling assembly(13), comprising a first sampling part(132), the first sampling part(132) is connected to the side wall(1112) through the first opening(121).

2. The battery pack(10) according to claim 1, wherein,
the first structural member(12) is provided with a first side(125), and the first side(125) faces the side wall(1112); and
at least a part of the first sampling part(132) is located between the side wall(1112) and the first side(125) and connects the side wall(1112) and the first side(125).

3. The battery pack(10) according to claim 1 or 2, wherein,
the first structural member(12) is further provided with a second opening(122), another part of the surface of the side wall(1112) is exposed to the second opening(122), and in the first direction(X), the first opening(121) is apart from the second opening(122); and
the sampling assembly(13) comprises a second sampling part(133), and the second sampling part(133) is connected to the side wall(1112) of the battery(11) through the second opening(122).

4. The battery pack(10) according to claim 3, wherein,
the sampling assembly(13) further comprises a substrate(131), and the first sampling part(132) and the second sampling part(133) are both disposed on the substrate(131); and
a part of the first structural member(12) is disposed between the side wall(1112) and the substrate(131).

5. The battery pack(10) according to claim 3, wherein,
the sampling assembly(13) further comprises a substrate(131), and the first sampling part(132) and the second sampling part(133) are both disposed on the substrate(131); and
viewed in a direction perpendicular to a surface of the substrate(131), the substrate(131) is apart from the first opening(121), and the substrate(131) is apart from the second opening(122).

6. The battery pack(10) according to claim 3, wherein,
the sampling assembly(13) further comprises a substrate(131), and the first sampling part(132) and the second sampling part(133) are both disposed on the substrate(131); and
a part of the substrate(131) is located between the first opening(121) and the second opening(122) in the first direction(X); and
in a direction perpendicular to the surface of the substrate(131), the part of the substrate(131) faces the side wall(1112).

7. The battery pack(10) according to claim 3, wherein,
the battery pack(10) comprises a plurality of batteries(11) stacked in a second direction(Y) perpendicular to the first direction(X);
the first structural member(12) covers at least a part of the side wall(1112) of each battery(11), and the first structural member(12) is provided with a plurality of first openings(121) and a plurality of second openings(122);
the sampling assembly(13) comprising a plurality of first sampling parts(132), wherein each first sampling part(132) is electrically connected to the side wall(1112) of a different battery(11) through a different first opening(121); and
the sampling assembly(13) comprising a plurality of second sampling part(133), and each second sampling part(133) is electrically connected to the side wall(1112) of a different battery(11) through a different second opening(122).

8. The battery pack(10) according to claim 7, wherein,
the first structural member(12) is provided with a first side(125), and the first side(125) faces the side wall(1112); and
in the first sampling part(132) and the second sampling part(133) connected to the same side wall(1112), a partial structure of at least one of the first sampling part(132) or the second sampling part(133) connected to the same side wall(1112) is located between the same side wall(1112) and the first side(125), and connects the same side wall(1112) and the first side(125).

9. The battery pack(10) according to claim 8, wherein,
the partial structure of both, the first sampling part(132) and the second sampling part(133) connected to the same side wall(1112), are located between the same side wall(1112) and the first side(125), and connect the same side wall(1112) and the first side(125);
extension directions of the first sampling part(132) and the second sampling part(133) connected to the same side wall(1112) are the same; and
some the first sampling parts(132) and some the second sampling parts(133) are disposed extending in the first direction(X), and some the first sampling parts(132) and some the second sampling parts(133) are disposed extending in the opposite direction of the first direction(X).

10. The battery pack(10) according to any one of claims 7 to 9,
further comprises a circuit board(14), the circuit board(14) is connected to the first structural member(12) in a third direction(Z), the third direction(Z) is perpendicular to the first direction(X) and the second direction(Y); and
the sampling assembly(13) further comprises a connection part(134), the connection part(134) is electrically connected to all the first sampling parts(132) and all the second sampling parts(133), and the connection part(134) is electrically connected to the circuit board(14).

11. The battery pack(10) according to claim 10, wherein,
each of the batteries(11) further comprises electrode terminals(113), and the electrode terminals(113) are connected to the electrode assembly(112) and extend out of the battery shell(111); and
the battery pack(10) further comprises:
a second structural member(17), connected to all the batteries(11); and
a conductive assembly(15), at least a part of the conductive assembly(15) is located between the batteries(11) and the second structural member(17), and electrically connects the electrode terminals(113) and the circuit board(14).

12. The battery pack(10) according to claim 11, wherein,
the second structural member(17) is provided with a second convex part(171), and a part of the conductive assembly(15) is located between the second convex part(171) and the batteries(11) in the first direction(X) and connects the second convex part(171) and the batteries(11).

13. The battery pack(10) according to claim 11 or 12, wherein,
all the batteries(11) form a plurality of serial modules(16), the plurality of serial modules(16) are connected in series in sequence, the plurality of serial modules(16) are provided with a total positive terminal(161) and a total negative terminal(162), neither the total positive terminal(161) nor the total negative terminal(162) is connected in series with any other electrode terminal(113);
the conductive assembly(15) comprises:
at least one first conductive member(151), each first conductive member(151) connecting two adjacent serial modules(16);
a second conductive member(152), connecting the total positive terminal(161) to the circuit board(14); and
a third conductive member(153), connecting the total negative terminal(162) to the circuit board(14); and
in the first direction(X), a size of a portion of the second conductive member(152) connected to the total positive terminal(161) is larger than a size of the each first conductive member(151), and a size of a portion of the third conductive member(153) connected to the total negative terminal(162) is larger than the size of the each first conductive member(151).

14. An electrochemical apparatus(100), comprising the battery pack(10) as claimed in any one of claims 1 to 13.

15. An electrical device(200), comprising the electrochemical apparatus(100) according to claim 14.
